# EUROPEAN PATENT SPECIFICATION

(11) **EP 3 521 075 B1**
(45) Date of publication and mention of the grant of the patent: **23.12.2020**
(21) Application number: 18382059.6
(22) Date of filing: 02.02.2018
(51) Int. Cl.: B60J 5/04

(54) **SEALING DEVICE FOR VEHICLE DOORS**
DICHTUNGSVORRICHTUNG FÜR FAHRZEUGTÜREN
DISPOSITIF D'ÉTANCHÉITÉ POUR PORTES DE VÉHICULE

(43) Date of publication of application: 07.08.2019
(73) Proprietor: Grupo Antolín-Ingeniería, S.A., 09007 Burgos (ES)
(72) Inventor: Gómez Cámara, David, 09007 BURGOS (BURGOS) (ES); Pérez Azcona, Jorge, 09007 BURGOS (BURGOS) (ES)
(74) Representative: Capitán García, Maria Nuria

(56) References cited:
- WO-A1-03/037669
- DE-A1- 19 914 189
- KR-A- 20020 056 559
- US-A1- 2006 261 635
- US-A1- 2010 000 156
- US-A1- 2017 313 165

## Description

### FIELD OF THE INVENTION

The present invention relates to a sealing device for vehicle doors having three main components, an elastic panel made of plastic foam with a closed-cell structure, a sealing strip placed along the perimeter of the panel, and fixing means for connecting the sealing device and the vehicle door ensuring the sealing function of the sealing device according to a simple way.

### BACKGROUND OF THE INVENTION

The vehicle door typically comprises an upper window frame and a door shell structure having an outer sheet facing the vehicle exterior joined to an inner sheet facing the vehicle interior.

The door shell structure houses several door functional components such as the window regulator, the loudspeaker, or the door lock.

In order to access the interior of the door shell structure for carrying out the mounting/dismounting operations of said functional components, the inner sheet comprises one or more access openings.

In order to avoid the entrance of water and dust inside the vehicle interior through the door shell, sealing devices are commonly used for covering the different access openings provided in the inner sheet. The sealing device divides the vehicle door into a wet area and a dry area. Sealing devices are for instance disclosed in documents DE 199 14 189 A1, US 2010/000156 A1 and KR 2002 0056559 A.

The simplest known solution to performance said division comprises the use of a plastic film covering the one or more access openings which is fixed along the whole perimeter of the inner sheet of the door shell structure.

The main advantages of this solution are the low weight and simplicity.

However due to the lack of self-supporting properties of the plastic film, it is necessary to fix the plastic film along the whole perimeter of said film, for example by an adhesive strip, in order to avoid the entrance of water since that the sealing device has no consistency enough to compress itself against the vehicle door.

Moreover due to the lack of self-supporting properties, the plastic film is difficult to manipulate during its mounting process and it does not allow the modular assembly of the plastic film with other functional components such as the window regulator, the electric wiring or the loudspeaker.

In order to improve the functionality of the sealing device and its handling, it is known sealing devices formed by self-supporting panels with a higher rigidity than a plastic film. Said self-supporting panels in addition to fulfilling the sealing function, they also perform other additional functions associated with the vehicle door environment.

For the purpose of keeping a reduce weight, said self-supporting panels have a low density and they are easily deformable, such as expanded polypropylene (EPP) or expanded polystyrene (EPS).

This structure in addition to acting as a water/dust barrier, it acts as a thermal and acoustic insulation and a safety element due to the properties of the plastic foam.

One known example to illustrate said kind of sealing devices is DE4337468. This patent discloses a sealing device formed by an expanded polypropylene panel that in addition to fulfill the above cited functions, low weight, insulation and safety, it also acts as a decorative element.

Others known examples are DE10026100 and DE19937000. These patents disclose sealing devices formed by expanded polypropylene or expanded polystyrene panel that in addition to fulfill the above cited functions, low weight, insulation and safety, they also act as a supporting elements for some of the door functional components commonly used in vehicle doors such as the window regulator, the electric wiring or the loudspeaker.

On the other hand, with the objective to enhance the mounting efficiency of the sealing device, it is desirable to use quick assembly fasteners for connecting the sealing device and the vehicle door.

One known example disclosing the use of quick assembly fasteners is EP1179451. This patent discloses a decorative sealing device formed by expanded polypropylene panel that in addition to fulfill the above cited functions, it comprises quick assembly fasteners for connecting the sealing device and the vehicle door, particularly it comprises clips for connecting the sealing device to the vehicle door.

Said clips are attached to clip-holders which in turn are welded to the sealing device.

This complex way of attaching the clips to the sealing device it is necessary due to the particular plastic foam structure with a low rigidity of the sealing device which it has not enough consistency by itself to support the clip in use and to ensure its correct operation.

Therefore the mounting of this kind of quick assembly fasteners involves the use of additional elements complicating the component, its manufacturing and increasing its cost.

The role of the fasteners in addition to being relevant to the mounting operations, it is very important in order to ensure the sealing function.

The fasteners should ensure an optimal tension assembly in order to compress the sealing device against the door structure enough to avoid even a minimal entrance of water or dust.

Taking the above explained into account, the clips disclosed in EP1179451 cannot ensure an optimal tension assembly and therefore cannot ensure the sealing function due to this kind of clips requires that its length must be larger in order to allow its mounting.

Thus once the clip is introduced into the hole provided in the door structure, it cannot compress enough the sealing device against said door structure to ensure the sealing function.

In view of the disadvantages mentioned above, the object of the invention is a sealing device for vehicle doors fulfilling several functions in addition to the sealing function such as thermal and acoustic insulation and a safety function, and at the same time it allows a simple mounting without adding additional components and ensuring at all times the sealing function.

### DESCRIPTION OF THE INVENTION

The present invention is established and characterised by the independent claim, while the dependent claims describe additional features thereof.

Due to the closed-cell structure of the plastic foam of the panel the sealing device has waterproof properties. Therefore the sealing device forms a barrier dividing the door shell into a wet area and a dry area in such a way that it ensures the sealing function.

Due to the low compressive strength of the plastic foam structure of the panel it has good elasticity properties. This means that the panel is deformable under the forces usually applied by the fixing means when the sealing device reaches the final mounting position on the vehicle door. It is because the compression exerted by the fixing means on the panel when the sealing device is in said final mounting position which in turn allows ensuring the tension assembly of the fixing means.

Therefore the elasticity properties of the panel contribute to the mounting kinematics of the assembly.

The panel is configured as a self-supporting panel. Self-supporting in the context of the invention means that the panel is capable of supporting its own weight and the weight of the functional components attached to it keeping its shape, during the handling and mounting operations and once it is mounted on the vehicle door.

Due to the panel is a self-supporting panel, it allows an easy handling of the sealing device and it allows facilitating the assembly of the sealing device on the vehicle door.

It is because the panel is consistent enough to ensure the sealing function in spite of having a limited number of punctual fixing means being capable of compressing the sealing strip against the perimeter of the main opening of the vehicle door in a continuous manner along the whole perimeter of the main opening.

Due to the closed-cell structure of the plastic foam of the panel it has a low rate of thermal conductivity, therefore the sealing device is a good thermal insulation enhancing the energy efficiency of the vehicle.

Moreover due to the closed-cell structure of the plastic foam of the panel, the sound does not pass through the plastic foam structure, therefore the sealing device is a good acoustic insulation.

Due to the closed-cell structure of the plastic foam of the panel in combination with the low compressive strength of the panel, it has a high capacity of absorbing energy because it is capable to dissipate a high amount of energy through its cell foam structure.

As a consequence of this, on the one hand the sealing device has a good impact resistance improving the passive safety in the event of side impact. On the other hand the sealing device is capable of absorbing the vibrations produced by the functional components such as the loudspeaker of the electric motor, when they are in use, improving the acoustical properties of the sealing device.

Due to the low compressive strength of panel, it allows a tighten mounting of any functional components, such as electric wiring, window regulator, attached on the panel, preventing in this way the rattle between the panel and said functional components. It improves the acoustical behaviour of the whole door.

On the one hand the special configuration and collaboration between the fixing means, the panel, and the sealing strip ensures the sealing function of the sealing device when it is assembled in the vehicle door.

It is due to the forces exerted by the fixing means on the panel when it adopts the final mounting position in combination with the elasticity properties of the panel.

Such forces result in the compression and the deformation along the mounting direction of both, the panel and the sealing strip, against the vehicle door. As a result of said compression and deformation of the panel, the thickness of the second fixing hole of the panel before reaching the final mounting position is greater than the thickness of the second fixing hole after reaching said final mounting position.

Therefore, the forces exerted by the fixing means apart from achieving an optimal tension assembly of the fixing means against the door structure, they ensure the sealing function of both, the whole assembly, due to the compression of the sealing strip against the door structure, and the second fixing hole of the panel, due to the compression of the material around said second fixing hole against the door structure.

On the other hand, due to the fact that the fixing means are specially configured to be housed in the second fixing hole of the panel, such that the retention wing is placed on a first side of the panel retaining the fixing means in the mounting direction, and an attaching head is placed on a second side of the panel, the fixing means have enough support throughout the thickness of the panel to perform its retention function between the sealing device and the vehicle door without any additional reinforcing elements around the area where the fixing means are mounted even taking into account the high elasticity of the panel.

This simplifies the configuration of the sealing device, its manufacturing process, its assembly on the door and consequently its cost.

According to the invention, the fixing means are a quarter turn clip, the process for connecting the sealing device and the door structure is quick and simple.

This process comprises positioning the sealing device against the vehicle door, the introduction of the attaching head of every quarter turn clip through and the first fixing hole of the vehicle door, and then rotating 90° every quarter turn clip in order to carry out the connection between the sealing device and the vehicle door.

In the optional case in which the diameter of the second fixing hole of the panel is smaller than the diameter of the cylindrical body of the quarter turn clip housed inside it, it results in a deformation of the material of the wall of the hole of the panel in such a way that the cylindrical body of the quarter turn clip and the wall of the second fixing hole of the panel elastically fit together.

Thus, the second fixing hole of the panel is completely sealed, both axially and radially, without using additional elements.

### DESCRIPTION OF THE FIGURES

The present specification is completed by a set of figures that illustrate a preferred embodiment and in no way limit the invention.
Figure 1 shows an explosion view of the assembly formed by the vehicle door and the sealing device.
Figure 2 shows a front view of the first side of the sealing device according to a first embodiment of the invention.
Figure 3 shows a front view of the second side of the sealing device according to a first embodiment of the invention.
Figure 4 shows a front view of the first side of the sealing device according to a second embodiment of the invention.
Figure 5 shows a front view of the second side of the sealing device according to a second embodiment of the invention.

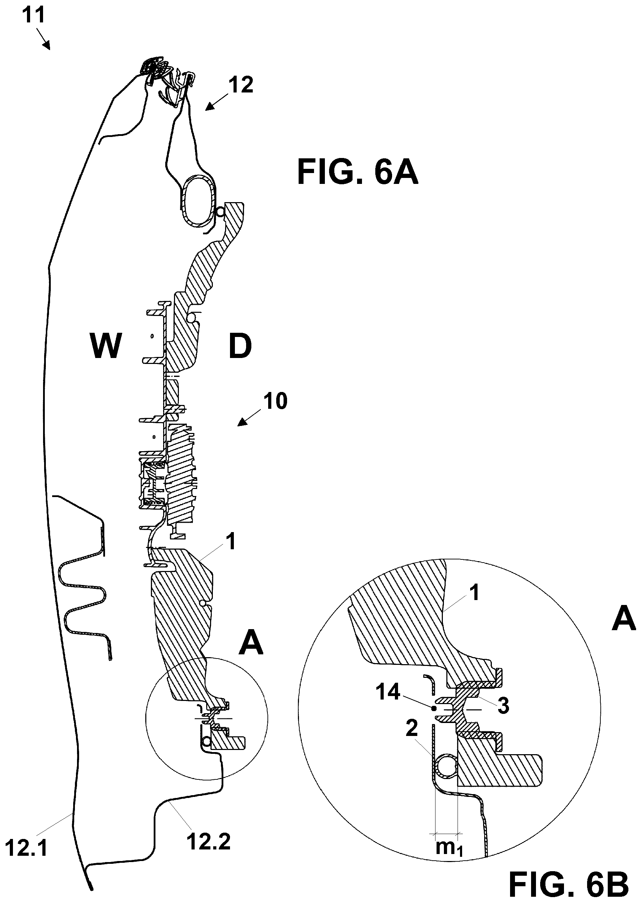

Figure 6A shows a lateral view of the assembly of figure 1 according to a pre-mounting position of the sealing device on the door structure.
Figure 6B shows an enlarged detail A corresponding to figure 6A of the area of the sealing strip.

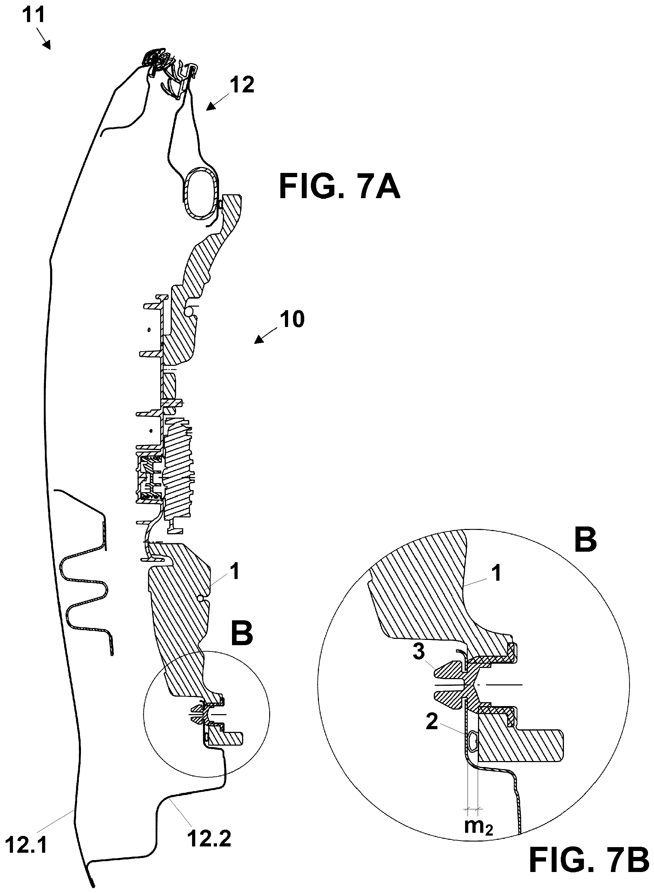

Figure 7A shows a lateral view of the assembly of figure 1 according to a final mounting position of the sealing device on the door structure.
Figure 7B shows an enlarged detail B corresponding to figure 7A of the area of the sealing strip wherein it is compressed against the vehicle door.
Figure 8 shows an explosion view of the quarter turn clip with the different planes orthogonal to the main axle, the panel, and the vehicle door.
Figure 9 shows the different steps of the mounting process for connecting the panel and the vehicle door by the quarter turn clip.
Figure 10 shows a detail view corresponding to a fixing point of the loudspeaker to the frame.
Figure 11 shows a detail view corresponding to a fixing point of the window regulator to the vehicle door.
Figure 12 shows a detail view corresponding to the housing of the panel for the electric motor.

### DETAILED DESCRIPTION OF THE INVENTION

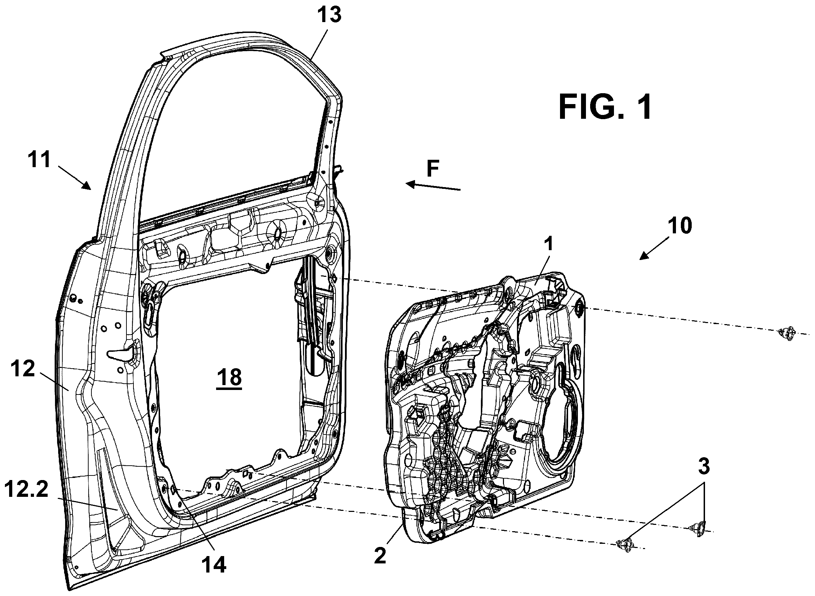

Figure 1 shows as explosion view of a vehicle door (11) and the sealing device (10) of the invention.

The vehicle door (11) comprises an upper window frame (13) and a door shell structure (12) having an outer sheet (12.1) facing the vehicle exterior joined to an inner sheet (12.2) facing the vehicle interior.

The vehicle door (11) has a main opening (18) for mounting/dismounting the functional components and a first fixing hole (14) for connecting the sealing device (10) with the vehicle door (11).

Both the main opening (18) and the first fixing hole (14) are placed in the inner sheet (12.2) of the vehicle door (11).

The main opening (18) occupies a large portion of the surface of the inner sheet (12.2) in order to access easily to the interior of the door shell structure (12) for carrying out the mounting/dismounting operations of the functional components housed inside the door shell structure (12) such as the window regulator, the loudspeaker or the door lock.

The first fixing hole (14) is configured to allow the connection between the sealing device (10) and the vehicle door (11) by inserting the fixing means (3) through it, and then by retaining said fixing means (3) in a final mounting position. Said first fixing hole (14) has a thickness e₃.

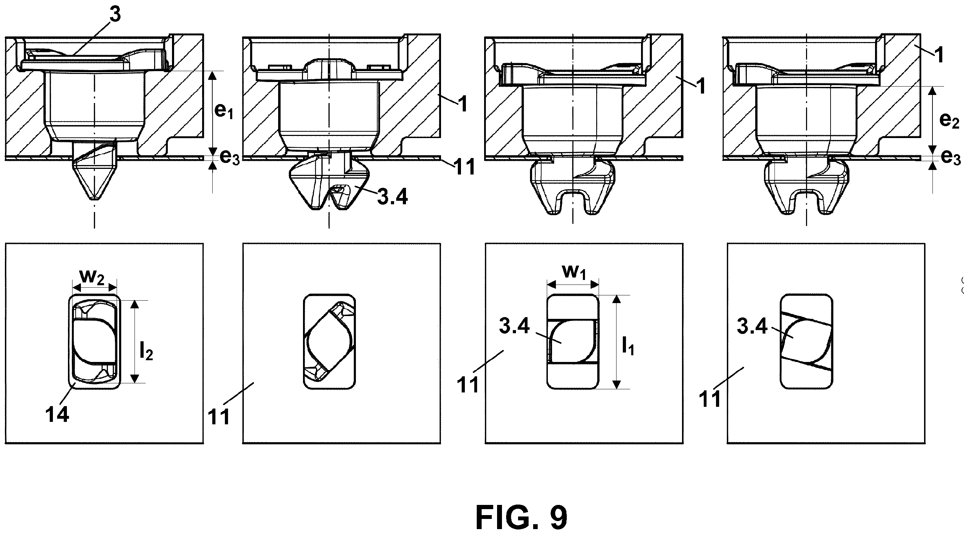

As figure 9 shows, preferably said first fixing hole (14) is non-circular mounting hole with a length l₁ and a width w₁. Said first fixing hole (14) allows the retention of the fixing means (3) in the particular case it is a quarter turn clip (3) described in detail below, when it is rotated 90°.

In order to divide the vehicle door (11) into a wet area W and a dry area D, it is provided a sealing device (10) covering the main opening (14). It creates a barrier against water/dust between the wet area W and the dry area D of the vehicle door (11).

The sealing device (10) is configured to be mounted on the vehicle door (11) along a mounting direction F in order to adopt a final mounting position in which the sealing device (10) and the vehicle door (11) are connected. In this final mounting position, the sealing device (10) divides the vehicle door (11) into the wet area W and the dry area D.

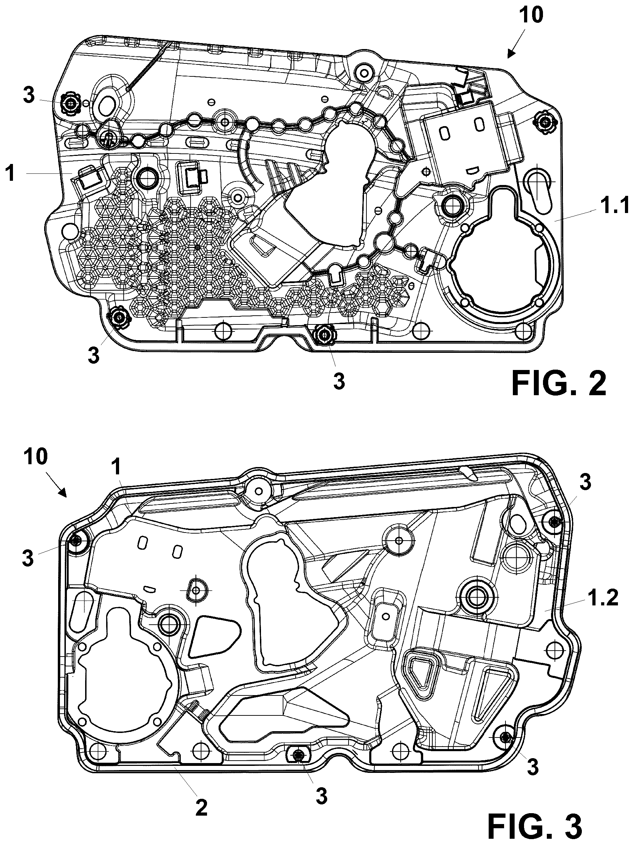

The mounting direction F is essentially perpendicular to the main surface of the sealing device (10) and coincides with the direction of the main axle z of the fixing means (3). As it can be seen in figures 2 and 3, the sealing device (10) comprises three main components: a panel (1), a sealing strip (2) and a fixing means (3) for connecting the sealing device (10) and the vehicle door (11) according to a simple way.

Particularly the panel (1) is configured to cover the main opening (18) of the vehicle door (11) in order to contribute to fulfil the sealing function.

The panel (1) is made of plastic foam with a closed-cell structure. Particularly the plastic foam closed-cell structure can be formed by closed-cell foam beads.

This panel (1) is mainly characterized by having a high elasticity and a high capacity to absorb energy.

Particularly the panel (1) has a compressive strength along the mounting direction F which coincides with the direction of the thickness of said panel (1), less than 1000 KPa at 25% strain measured according to ISO844 and greater than 150 KPa at 25% strain measured according to ISO844.

According to the test method corresponding to ISO844, five 50x50x50 mm cubes are taken and compressed in an axial direction to the faces at a rate of 5 mm/min and at 25% strain. The compressive strength and corresponding relative deformation obtained are recorded.

It allows that the panel (1) is deformed along the mounting direction F taking into account the forces exerted along the mounting direction F by the fixing means (3) on the panel (1) when the sealing device (10) is connected with the vehicle door (11) in the final mounting position.

Therefore the elasticity properties of the panel (1) contribute to the mounting kinematics of the assembly.

On the other hand, the panel (1) is characterized by its self-supporting properties, that is, it is able to support its own weight and the weight of other components attached to it keeping its shape, during the handling and mounting operations, and once it is mounted on the vehicle door.

According to a preferred embodiment, the panel (1) has an average density between 40 and 60 kg/m³. The low density of the panel (1) results in a low weight panel (1).

According to a preferred embodiment, the density of the panel (1) is the same along the direction of the thickness of said panel (1) in such a way that at any given point of the panel (1), the density of the core is the same than the density of the surface of the panel (1). It does not mean that the density at one point of the panel (1) is the same than the density at other point, it will depend on how compressed the material of panel (1) is at each point.

This feature contributes to simplify the manufacturing process of the panel (1) and consequently to reduce its cost.

Some examples for the panel (1) materials can be EPP (expanded polypropylene) or EPS (expanded polystyrene).

According to a preferred embodiment the manufacturing process of the panel (1) comprises the injection of foam beads, for example EPP foam beads or EPS foam beads, into a mould. Then pressure and steam heat, for example by water vapour, are applied in order to expand and fuse the foam beads into a finished shape according to the shape of the mould.

The panel (1) has a first side (1.1) and a second side (1.2) opposite to the first side (1.1), which define the main surfaces of the panel (1). Particularly the first side (1.1) faces to the vehicle interior, and the second side (1.2) faces to the vehicle exterior.

Optionally, the surface corresponding to the second side (1.2) has a surface finishing (not represented) wherein the voids existing among surface cells of the panel (1) are sealed. Said surface finishing can be obtained for example, by a specific treatment of the surface of the mould in contact with the second side (1.2) of the panel (1) during its manufacturing process.

Moreover the panel (1) has a second fixing hole (1.3) extended through the panel (1) from the first side (1.1) to the second side (1.2). This second fixing hole (1.3) houses at least a part of the fixing means (3) as explained later. The second fixing hole (1.3) has a thickness e₁.

During the mounting process, said second fixing hole (1.3) with the fixing means (3) housed inside it, is aligned with the first fixing hole (14) of the vehicle door (11) along the mounting direction F, in order to carry out the connection between the sealing device (10) and the vehicle door (11) for adopting the final mounting position.

The second element which forms part of the sealing device (10) is the sealing strip (2).

It is placed along the perimeter of the second side (1.2) of the panel (1), that is, along the contour of the panel (1) which is in contact with the perimeter of the vehicle door (11), and particularly of the inner sheet (12.2), around the main opening (18) when the sealing device (10) is connected with the vehicle door (11) according to the final mounting position.

Preferably the sealing strip (2) comprises a hollow profile, although other geometries could be possible.

In order to ensure the compression of the sealing strip (2) is enough to guarantee the sealing function in the final mounting position and at the same time to avoid the breaking of the sealing strip (2) due to an excessive compression, the ratio between the main dimension m₁ of the sealing strip (2) along the mounting direction F when said sealing strip (2) is not compressed and the main dimension m₂ of the sealing strip (2) along the mounting direction F when it is not compressed is in the range between 1.75 and 2.5.

The sealing strip (2) can be configured as a closed loop.

The sealing strip (2) can be integrated with the panel (1) that is, it can be formed from the same material and at the same time than the panel (1).

However preferably, the sealing strip (2) is configured as an additional component applied on the second side (1.2) of the panel (1).

The sealing strip (2) can be applied for example by extrusion.

In this case a junction (not represented) between the ends of the sealing strip (2) is formed. This junction is designed to be on the upper part of the panel (1) wherein there is no risk to stagnant water.

The sealing strip (2) for example can be made of thermoplastic elastomer (TPE), and preferably a thermoplastic vulcanisates (TPV).

The last essential component which configures the sealing device (10) is the fixing means (3). This fixing means (3) are considered the first fixing means since that later on the description other different fixing means are described.

They are configured to be housed inside the second fixing hole (1.3) of the panel (1) in order to connect the sealing device (10) and the vehicle door (11) to adopt a final mounting position.

The fixing means (3) comprise a main axle z extended along the mounting direction F, a retention wing (3.1) placed on a first side (1.1) of the panel (1) and configured to retain the fixing means (3) in the second fixing hole (1.3) of the panel (1), due to the interference between the retention wing (3.1) and the first side (1.1) of the panel (1) around the second fixing hole (1.3), an attaching head (3.4) placed on a second side (1.2) of the panel (1), and a cylindrical body (3.2) connected to the retention wing (3.1) and housed in the second fixing hole (1.3) of the panel (1).

The sealing device (10) can comprises one or several fixing means (3) along the contour of the panel (1) as for example it is shown in figure 1.

For the purpose of ensuring an appropriate compression of the sealing strip (2) preferably the fixing means (3) are located close to the sealing strip (2) and they are uniformly distributed in order to ensure a homogenous compression along its length.

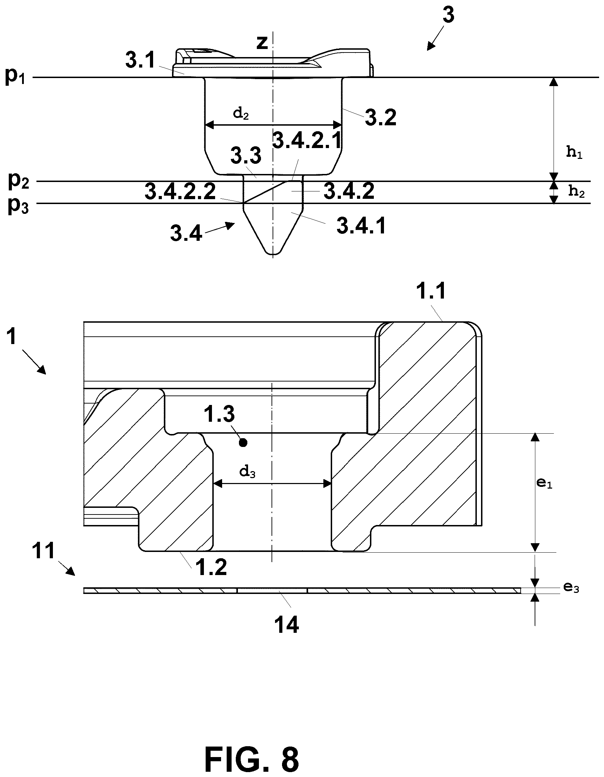

As figure 8 shows, the fixing means (3) comprise a quarter turn clip (3).

In this particular case, the quarter turn clip (3) comprises:
- the main axle z,
- the retention wing (3.1) configured to retain the quarter turn clip (3) in the second fixing hole (1.3) of the panel (1). It is configured to be placed on the first side (1.1) of the panel (1)
- the cylindrical body (3.2) connected to the retention wing (3.1) through a first plane p₁ orthogonal to the main axle z. The cylindrical body (3.2) is configured to be housed inside of the second fixing hole (1.3) of the panel (1).

Preferably the cylindrical body (3.2) has a diameter bigger than the diameter of the second fixing hole (1.3) of the panel (1) in such a way that when the cylindrical body (3.2) is inside the second fixing hole (1.3) they elastically fit together.
- a neck (3.3) connected to the cylindrical body (3.2),
- the attaching head (3.4). It is configured to be placed on the second side (1.2) of the panel (1) and it is insertable through the first fixing hole (14) of the vehicle door (1). The attaching head (3.4) is connected to the neck (3.3). The attaching head (3.4) has a main body (3.4.1) and two tension ramps (3.4.2) wherein the tension ramps (3.4.2) comprises a final mounting edge (3.4.2.1) in a second plane p₂ orthogonal to the main axle z and parallel to the plane p₁, and a starting mounting edge (3.4.2.2) in a third plane p₃ orthogonal to the main axle z and parallel to the plane p₁.

As figure 9 shows, the attaching head (3.4) is configured to adopt two positions, a first position in which the attaching head (3.4) can pass through the first fixing hole (14) of the vehicle door (11) and a second position that coincides with the final mounting position in which the attached head (3.4) is rotated with respect to the first position, and in which the attaching head (3.4) is retained within the first fixing hole (14) of the vehicle door (11).

In order to the attaching head (3.4) can pass through the first fixing hole (14), the cross section of the attaching head has a length l₂ and a width w₂ smaller than the corresponding length l₁ and width l₂ of said first fixing hole (14), as shown in figure 9.

In the final mounting position, a portion of the panel (1) around the second fixing hole (1.3) and the sealing strip (2) are compressed and deformed along the mounting direction F against the vehicle door (11) due to the action of the fixing means (3) in such a way that the thickness e₁ of the second fixing hole (1.3) before the fixing means (3) adopt the final mounting position is greater than the thickness e₂ of the second fixing hole (1.3) after the fixing means (3) adopt said final mounting position.

In order to achieve this effect wherein the fixing means (3) are a quarter turn clip (3), the separation distance h₁ between the first plane p₁ and the second plane p₂ is smaller than the thickness e₁ of the second fixing hole (1.3) as shown in figure 9.

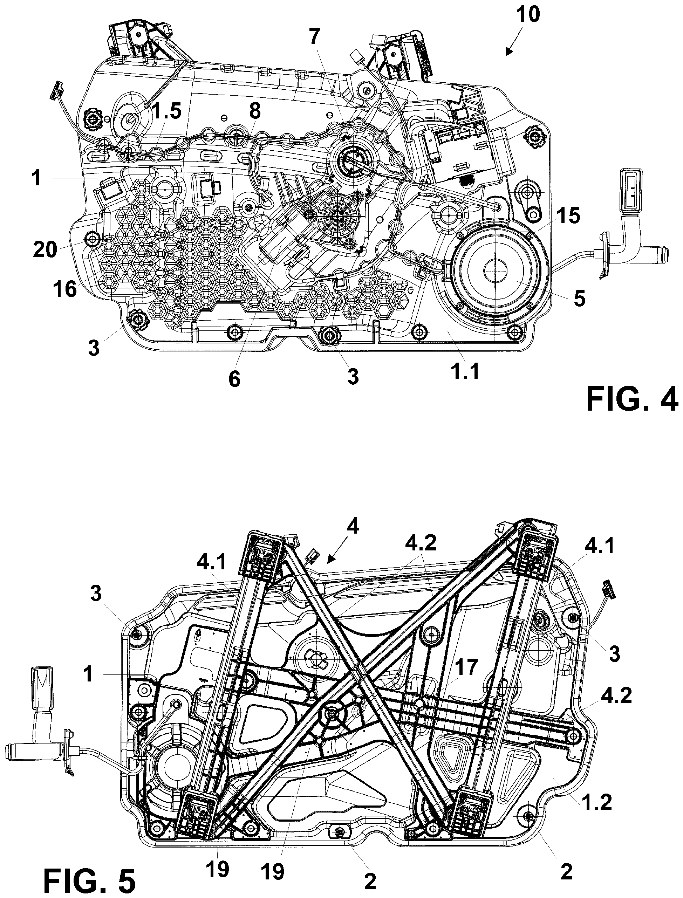

As shown figures 4 and 5, in addition to the three main components (1, 2, 3) described above, the sealing device (10) optionally can comprise other functional components typically mounted on a vehicle door (11) such as a loudspeaker (5), a window regulator (4), a padding (16), door handle (not represented), electric wiring (8) or the airbag sensor (7).

Some of the functional components mentioned above need the presence of a frame (19) for supporting said functional components, that is an element capable of supporting the efforts produced during the operation of said functional components. For that, said functional components are connected to the frame (19) by third attachment means (15).

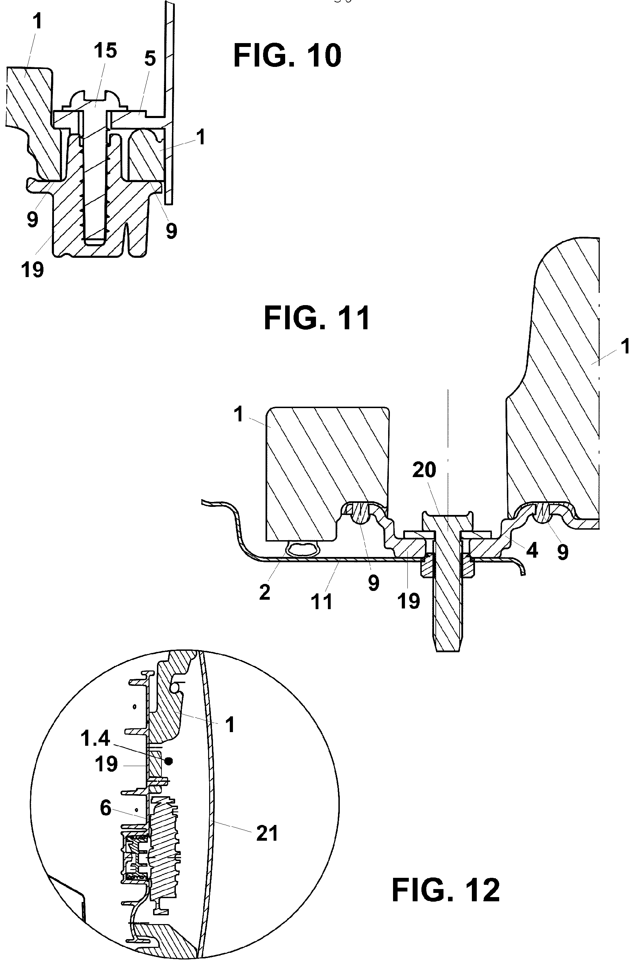

The third attachment means (15) can comprise for example screws as shown in figure 10.

The frame (19) is preferably made of plastic material designed to support the efforts mentioned above.

The frame (19) is connected to the panel (1) by second attachment means (9) and optionally it can also be connected with the vehicle door (11) in the final mounting position of the assembly by fourth attachment means (20).

The second attachment means (9) can comprise preferably adhesive but other attaching means could be possible.

The fourth attachment means (20) can comprise preferably screws but other attaching means could be possible.

One example of a functional component which needs the presence of a frame (19) is the loudspeaker (5) .

As figure 10 shows, the loudspeaker (5) is sandwiched and compressed between the frame (19) and the panel (1) and it is directly fixed to the frame (19) by the third attachment means (15).

This particular configuration allows the vibrations produced by the loudspeaker (5) during its normal use being absorbed by the panel (1).

So this particular configuration is particularly advantageous because it takes the advantages of the panel (1), due to its energy absorption capacity, and the advantages of the frame (19), due to efforts supporting capacity.

Other example of a functional component which needs the presence of a frame (19) as the one described above, is the electric motor (6) for a window regulator (4) .

As figure 12 shows, the electric motor (6) is fixed directly to the frame (19).

Moreover the panel (1) comprises a cavity (1.4) configured to house said electric motor (6).

In this way, once the decorative panel (21) is mounted on the vehicle door (11), the electric motor (6) is confined between the cavity (1.4) of the panel (1) and the decorative panel (21).

This particular configuration allows mainly two effects. On the one hand the vibrations produced by the electric motor (6) during its normal use are absorbed by the panel (1). On the other hand the sound produced by the electric motor (6) during its normal use is confined inside the cavity (1.4) covered by the decorative panel (21) in such a way that said sound is not perceived by the occupant of the vehicle.

Other functional component which can be added to the sealing device (10) is the window regulator (4).

As it is represented in figure 11, the window regulator (4) is fixed to the panel (1) by the second attachment means (9) and optionally can also be fixed to the door vehicle (11) in the final mounting position of the assembly by the fourth attachment means (20).

The second attachment means (9) can comprise preferably adhesive but other attaching means could be possible.

The fourth attachment means (20) can comprise preferably screws but other attaching means could be possible.

The window regulator (4) can comprise one rail (4.1) or two rails (4.1) as figures 4 and 5 show.

The window regulator (4) can be configured as a structural supporting element formed by two rails (4.1) connected each other by reinforced elements (4.2). Moreover the reinforced elements (4.2) can comprise supporting portions, as the frame (19), for fixing other functional components such as an electric motor (6).

The reinforced elements (4.2) allow distributing the efforts generated during the window regulator (4) and/or other functional components operation through the whole component in order to transmit them to the vehicle door (11) by for example the fourth fixing means (20).

The window regulator (4) can be made of plastic material reinforced with additional reinforcing means such as fibrous material, or it can be reinforced by geometrical configurations, such as a ribbed configuration or an increased thickness thereof along its length, or a configuration with a cross section providing a greater moment of inertial along the direction of the efforts generated by the functional component.

According to an embodiment of the invention the frame (19) for fixing the loudspeaker (5) can be formed as integral part of the window regulator (4).

According to other embodiment of the invention the frame (19) for fixing the electric motor (6) can be formed as integral part of the window regulator (4).

Thus the window regulator (4) is configured as an autonomous structural supporting element, that is, as an element capable of supporting the efforts generated due to the operation of the window regulator (4) and/or other functional components.

Then the efforts supported by the window regulator (4) are transmitted to the vehicle door (11).

Said efforts can be transmitted directly to the vehicle door (11) in the case of the window regulator (4) is fixed to the vehicle door (11) by the fourth attachment means (20).

Said efforts can also be transmitted to the vehicle door (11) indirectly by the panel (1), since the window regulator (4) is connected to the panel (1) by the second attachment means (9), and in turn the panel (1) is fixed to the vehicle door (11) by the fixing means (3).

The embodiment in which the window regulator (4) is also fixed to the vehicle door (11) by the fourth fixing means (20), as it is represented in figure 11, has significant advantages over the configuration in which the window regulator (4) is only attached to the panel (1).

According this particular embodiment on the one hand the panel (1) is fixed to the vehicle door (11) by the fixing means (3), and on the other hand the window regulator (4) is fixed to the vehicle door (11) by the fourth fixing means (20).

The fact to separate the fixing means for connecting each component (1, 4) to the vehicle door (11) allows that:
- The main function of the panel (1), that is the sealing function, it is particularly controlled due to the fixing means (3) are specially configured to fulfil this function due to the tension exerted by them in combination with the compression and the deformation of the panel (1).
- The main function of the window regulator (4) in the particular embodiment in which the functional components are connected to it, that is the structural function (the capacity to support and transmit the different efforts produced during the operation of the functional components), it is particularly controlled due to the fourth fixing means (20) are specially configured to fulfil this function due to they allow transmitting the efforts produced by the different functional components in use and the efforts produced during the operation of the window regulator (4) to the vehicle door (11).

Therefore according to this configuration both functions can be combined in a single unit the sealing device (10) and being independently controlled.

Additionally the sealing device (10) can comprise other functional components such as the interior pull handle attachments (17) as it is shown in figure 5 and the airbag sensor (7) as it is shown in figure 4.

Said components (7, 17) can be connected to the frame (19) or to the window regulator (4) in the case in which the frame (19) forms an integral part of the window regulator (4).

Additionally the sealing device (10) can comprises other functional components such as the padding (16) for passive safety, or the channels (1.5) for housing the electric wiring (8).

Said components (16, 1.5) are integrated with the panel (1).

Due to the high elasticity of the panel (1) resulting in a high capacity of absorbing energy, the panel (1) allows absorbing the energy produced in the event of a lateral impact for the occupant protection allowing the configuration of the padding as an integral part of the panel (1) as figure 4 shows.

The padding (16) can be formed by hollow cavities having different shapes.

In the example shown in the figure 5, the padding (16) has a honeycomb structure, however the invention is not limited to said specific configuration.

As shown in figure 4, the panel (1) also comprises channels (1.5) for encapsulating tightly the electric wiring (8) due to the channels comprise several walls for limiting the movement of the electric wiring (8) in all the possible directions.

The configuration of the channels (1.5) avoids the generation of noises due to the lack of gaps between the panel (1) and the electric wiring (8).

## Claims

1. Sealing device (10) for vehicle doors (11) having a main opening (18) and a first fixing hole (14), wherein the sealing device (10) is configured to be mounted on the vehicle door (11) along a mounting direction F, wherein the sealing device (10) comprises:
a panel (1) made of plastic foam with a closed-cell structure and being self-supporting,
the panel (1) is configured to cover the main opening (18) of the vehicle door (11),
the panel (1) has a compressive strength along the mounting direction F less than 1000 KPa at 25% strain measured according to ISO844 and greater than 150 KPa at 25% strain measured according to ISO844,
the panel (1) having a first side (1.1) and a second side (1.2) opposite to the first side (1.1) and a second fixing hole (1.3) extended through the panel (1) from the first side (1.1) to the second side (1.2) and having a thickness e₁,
wherein the sealing device (10) further comprises
fixing means (3) configured for connecting the sealing device (10) and the vehicle door (11) having a main axle z extended along the mounting direction F, a retention wing (3.1) placed on a first side (1.1) of the panel (1), an attaching head (3.4) placed on a second side (1.2) of the panel (1) and a cylindrical body (3.2) connected to the retention wing (3.1) and housed in the second fixing hole (1.3) of the panel (1),
wherein said fixing means (3) are configured to adopt a final mounting position in which the fixing means (3) connect the sealing device (10) and the vehicle door (11),
wherein in the final mounting position a portion of the panel (1) around the second fixing hole (1.3) and the sealing strip (2) are compressed and deformed along the mounting direction F due to the action of the fixing means (3) in such a way that the thickness e₁ of the second fixing hole (1.3) before the fixing means (3) adopt the final mounting position is greater than the thickness e₂ of the second fixing hole (1.3) after the fixing means (3) adopt said final mounting position,
wherein the fixing means (3) are a quarter turn clip (3) which (3) comprises:
• the main axle z,
• the retention wing (3.1) configured to retain the quarter turn clip (3) in the second fixing hole (1.3) of the panel (1) and configured to be placed on the first side (1.1) of the panel (1),
• the cylindrical body (3.2) is connected to the retention wing (3.1) through a first plane p₁ orthogonal to the main axle z, wherein the attaching head (3.4) is insertable through the first fixing hole (14) of the vehicle door (11), and wherein the attaching head (3.4) is configured to adopt two positions, a first position in which the attaching head (3.4) is insertable through the first fixing hole (14) of the vehicle door (11) and a second position that coincides with the final mounting position, in which the attached head (3.4) is retainable within the first fixing hole (14) of the vehicle door (11) due to the rotation of the quarter turn clip (3) with respect to the first position,
**characterized in that** the quarter turn clip further comprises:
• a neck (3.3) connected to the cylindrical body (3.2),
• the attaching head (3.4) is connected to the neck (3.3)
wherein said attaching head (3.4) has a main body (3.4.1) and two tension ramps (3.4.2) wherein the tension ramps (3.4.2) comprise a final mounting edge (3.4.2.1) in a second plane p₂ orthogonal to the main axle z and parallel to the plane p₁, and a starting mounting edge (3.4.2.2) in a third plane p₃ orthogonal to the main axle z and parallel to the plane p₁,
wherein
the first plane p₁ and the second plane p₂ are separated a distance h₁ smaller than the thickness e₁ of the second fixing hole (1.3) of the panel (1). and **characterized in that** the sealing device (10) further comprises a sealing strip (2) placed along the perimeter of the second side (1.2) of the panel (1)

2. Sealing device (10) for motor vehicle doors (11) according to claim 1 wherein cylindrical body (3.2) has a diameter bigger than the diameter of the second fixing hole (1.3) of the panel (1) in such a way that when the cylindrical body (3.2) is inside the second fixing hole (1.3) they elastically fit together.

3. Sealing device for motor vehicle door according to claim 1 wherein the panel (1) has an average density between 40 and 60 kg/m3.

4. Sealing device (10) for motor vehicle doors (11) according to claim 1 wherein the density of the panel (1) at any given point of the panel (1) is the same along the direction of the thickness of the panel (1) in such a way that at any given point of the panel (1) the density of the core is the same than the density of the surface.

5. Sealing device (10) for motor vehicle doors (11) according to claim 1 wherein the plastic foam with a closed-cell structure of the panel (1) is formed by closed-cell foam beads.

6. Sealing device for motor vehicle doors according to claim 1 wherein the panel (1) is made of expanded polypropylene.

7. Sealing device (10) for motor vehicle doors (11) according to claim 1 wherein the second side (1.2) of the panel (1) has a surface finishing wherein the voids existing among surface cells of the panel (1) are sealed.

8. Sealing device (10) for motor vehicle doors (11) according to claim 1 wherein the sealing strip (2) forms a closed loop and has a hollow profile.

9. Sealing device (10) for motor vehicle doors (11) according to claim 1 wherein the ratio between the main dimension of the sealing strip (2) along the mounting direction F when said sealing strip (2) is not compressed and when said sealing strip (2) is compressed is in the range between 1.75 and 2.5.

10. Sealing device (10) for motor vehicle doors (11) according to claim 1 wherein the material sealing strip (2) is thermoplastic elastomer and wherein the sealing strip (2) is applied by extrusion on the second side (1.2) of the panel (1).

11. Sealing device (10) for motor vehicle doors (11) according to claim 1 comprising a frame (19) for supporting functional components, wherein the frame (19) is connected with the panel (1).

12. Sealing device (10) for motor vehicle doors (11) according to claim 11 wherein a loudspeaker (5) in fixed to the frame (19) in such a way that the panel (1) is sandwiched compressed between the frame (19) and the loudspeaker (5) in order to reduce the vibrations produced by the loudspeaker (5).

13. Sealing device (10) for motor vehicle doors (11) according to claim 1 comprising window regulator (4) fixed to the panel (1).

14. Sealing device (10) for motor vehicle doors (11) according to claim 13 wherein the window regulator (4) comprises a frame (19) for fixing the electric motor (6) of the window regulator (4).

15. Sealing device (10) for motor vehicle doors (11) according to claim 1 comprising a frame (19) fixed to the panel (1) for supporting the loudspeaker (5) wherein the frame (19) is an integral part of a window regulator (4) and wherein the panel (1) is sandwiched and compressed between the frame (19) and the loudspeaker (5) in order to reduce the vibrations produced by the loudspeaker (5).

16. Sealing device (10) for motor vehicle doors (11) according to claim 1 wherein the panel (1) comprises a cavity (1.4) configured to house tightly an electric motor (6) for a window regulator (4) in order to prevent vibrations produced by the electric motor (6) .

17. Sealing device (10) for motor vehicle doors (11) according to claim 1 comprising a padding (16) integrated with the panel (1) for absorbing the energy produced in the event of a lateral impact.

## Patentansprüche

1. Dichtungsvorrichtung (10) für Fahrzeugtüren (11), die eine Hauptöffnung (18) und ein erstes Befestigungsloch (14) aufweisen, wobei die Dichtungsvorrichtung (10) so konfiguriert ist, dass sie entlang einer Montagerichtung F an der Fahrzeugtür (11) montiert wird, wobei die Dichtungsvorrichtung (10) umfasst:
ein Panel (1) aus Kunststoffschaum mit einer geschlossenzelligen Struktur und selbsttragend,
wobei das Panel (1) so konfiguriert ist, dass es die Hauptöffnung (18) der Fahrzeugtür (11) abdeckt,
wobei das Panel (1) eine Druckfestigkeit entlang der Montagerichtung F von weniger als 1000 kPa bei 25 % Dehnung, gemessen gemäß ISO844, und mehr als 150 kPa bei 25 % Dehnung, gemessen gemäß ISO844, aufweist,
wobei das Panel (1) eine erste Seite (1.1) und eine zweite Seite (1.2) gegenüber der ersten Seite (1.1) und ein zweites Befestigungsloch (1.3) aufweist, das sich durch das Panel (1) von der ersten Seite (1.1) bis zu der zweiten Seite (1.2) erstreckt und eine Dicke e₁ aufweist,
wobei die Dichtungsvorrichtung (10) weiter umfasst
Befestigungsmittel (3), die konfiguriert sind, um die Dichtungsvorrichtung (10) und die Fahrzeugtür (11) zu verbinden, die eine sich entlang der Montagerichtung F erstreckende Hauptachse z, einen Rückhalteflügel (3.1), der auf einer ersten Seite (1.1) des Panels (1) angeordnet ist, einen Befestigungskopf (3.4), der auf einer zweiten Seite (1.2) des Panels (1) angeordnet ist, und einen zylindrischen Körper (3.2) aufweist, der mit dem Rückhalteflügel (3.1) verbunden ist und in dem zweiten Befestigungsloch (1.3) des Panels (1) untergebracht ist,
wobei die Befestigungsmittel (3) konfiguriert sind, um eine endgültige Montageposition einzunehmen, in der die Befestigungsmittel (3) die Dichtungsvorrichtung (10) und die Fahrzeugtür (11) verbinden,
wobei in der endgültigen Montageposition ein Abschnitt des Panels (1) um das zweite Befestigungsloch (1.3) herum und der Dichtungsstreifen (2) durch die Wirkung der Befestigungsmittel (3) entlang der Montagerichtung F derart zusammengedrückt und verformt werden, dass die Dicke e₁ des zweiten Befestigungslochs (1.3), bevor die Befestigungsmittel (3) die endgültige Montageposition einnehmen, größer ist als die Dicke e₂ des zweiten Befestigungslochs (1.3), nachdem die Befestigungsmittel (3) diese endgültige Montageposition einnehmen,
wobei die Befestigungsmittel (3) eine Vierteldrehungsklammer (3) sind, welche (3) umfasst:
• die Hauptachse z,
• den Rückhalteflügel (3.1), der konfiguriert ist, um die Vierteldrehungsklammer (3) in dem zweiten Befestigungsloch (1.3) des Panels (1) zu halten, und konfiguriert ist, um auf der ersten Seite (1.1) des Panels (1) platziert zu werden,
• den zylindrischen Körper (3.2), der mit dem Rückhalteflügel (3.1) über eine erste Ebene p₁ senkrecht zur Hauptachse z verbunden ist, wobei der Befestigungskopf (3.4) durch das erste Befestigungsloch (14) der Fahrzeugtür einführbar ist (11) und wobei der Befestigungskopf (3.4) so konfiguriert ist, dass er zwei Positionen einnimmt, eine erste Position, in der der Befestigungskopf (3.4) durch das erste Befestigungsloch (14) der Fahrzeugtür (11) eingesetzt werden kann und eine zweite Position, die mit der endgültigen Montageposition zusammenfällt, in der der Befestigungskopf (3.4) innerhalb des ersten Befestigungslochs (14) der Fahrzeugtür (11) aufgrund der Drehung der Vierteldrehungsklammer (3) in Bezug auf die erste Position gehalten werden kann,
**dadurch gekennzeichnet, dass** die Vierteldrehungsklammer weiter umfasst:
• einen Hals (3.3), der mit dem zylindrischen Körper (3.2) verbunden ist,
• den Befestigungskopf (3.4), der mit dem Hals (3.3) verbunden ist,
wobei der Befestigungskopf (3.4) einen Hauptkörper (3.4.1) und zwei Spannungsrampen (3.4.2) aufweist, wobei die Spannungsrampen (3.4.2) eine endgültige Montagekante (3.4.2.1) in einer zweiten Ebene p₂ orthogonal zur Hauptachse z und parallel zur Ebene p₁ und eine Startmontagekante (3.4.2.2) in einer dritten Ebene p₃ orthogonal zur Hauptachse z und parallel zur Ebene p₁ aufweisen,
wobei die erste Ebene p₁ und die zweite Ebene p₂ um einen Abstand h₁ voneinander getrennt sind, der kleiner als die Dicke e₁ des zweiten Befestigungslochs (1.3) des Panels (1) ist, und **dadurch gekennzeichnet, dass** die Dichtungsvorrichtung (10) weiter einen Dichtungsstreifen (2) umfasst, der entlang des Umfangs der zweiten Seite (1.2) des Panels (1) angeordnet ist.

2. Dichtungsvorrichtung (10) für Kraftfahrzeugtüren (11) nach Anspruch 1, wobei der zylindrische Körper (3.2) einen Durchmesser aufweist, der größer ist als der Durchmesser des zweiten Befestigungslochs (1.3) des Panels (1), sodass sie elastisch zusammenpassen, wenn der zylindrische Körper (3.2) sich innerhalb des zweiten Befestigungslochs (1.3) befindet.

3. Dichtungsvorrichtung für Kraftfahrzeugtür nach Anspruch 1, wobei das Panel (1) eine durchschnittliche Dichte zwischen 40 und 60 kg/m3 aufweist.

4. Dichtungsvorrichtung (10) für Kraftfahrzeugtüren (11) nach Anspruch 1, wobei die Dichte des Panels (1) an jedem gegebenen Punkt des Panels (1) entlang der Richtung der Dicke des Panels (1) gleich ist, sodass an jedem gegebenen Punkt des Panels (1) die Dichte des Kerns die gleiche ist wie die Dichte der Oberfläche.

5. Dichtungsvorrichtung (10) für Kraftfahrzeugtüren (11) nach Anspruch 1, wobei der Kunststoffschaum mit einer geschlossenzelligen Struktur des Panels (1) durch geschlossenzellige Schaumperlen gebildet wird.

6. Dichtungsvorrichtung für Kraftfahrzeugtüren nach Anspruch 1, wobei das Panel (1) aus expandiertem Polypropylen besteht.

7. Dichtungsvorrichtung (10) für Kraftfahrzeugtüren (11) nach Anspruch 1, wobei die zweite Seite (1.2) des Panels (1) eine Oberflächenveredelung aufweist, wobei die zwischen den Oberflächenzellen des Panels (1) vorhandenen Hohlräume abgedichtet sind.

8. Dichtvorrichtung (10) für Kraftfahrzeugtüren (11) nach Anspruch 1, wobei der Dichtungsstreifen (2) eine geschlossene Schleife bildet und ein Hohlprofil aufweist.

9. Dichtungsvorrichtung (10) für Kraftfahrzeugtüren (11) nach Anspruch 1, wobei das Verhältnis zwischen der Hauptabmessung des Dichtungsstreifens (2) entlang der Montagerichtung F, wenn der Dichtungsstreifen (2) nicht zusammengedrückt wird und wenn der Dichtungsstreifen (2) komprimiert ist, im Bereich zwischen 1,75 und 2,5 liegt.

10. Dichtungsvorrichtung (10) für Kraftfahrzeugtüren (11) nach Anspruch 1, wobei der Materialdichtungsstreifen (2) ein thermoplastisches Elastomer ist und wobei der Dichtungsstreifen (2) durch Extrusion auf der zweiten Seite (1.2) des Panels (1) aufgebracht ist.

11. Dichtungsvorrichtung (10) für Kraftfahrzeugtüren (11) nach Anspruch 1, umfassend einen Rahmen (19) zum Tragen von Funktionskomponenten, wobei der Rahmen (19) mit dem Panel (1) verbunden ist.

12. Dichtungsvorrichtung (10) für Kraftfahrzeugtüren (11) nach Anspruch 11, wobei ein Lautsprecher (5) so am Rahmen (19) befestigt ist, dass das Panel (1) komprimiert zwischen dem Rahmen (19) und dem Lautsprecher (5) angeordnet ist, um die vom Lautsprecher (5) erzeugten Vibrationen zu reduzieren.

13. Dichtungsvorrichtung (10) für Kraftfahrzeugtüren (11) nach Anspruch 1, umfassend einen an dem Panel (1) befestigten Fensterregler (4).

14. Dichtungsvorrichtung (10) für Kraftfahrzeugtüren (11) nach Anspruch 13, wobei der Fensterregler (4) einen Rahmen (19) zum Befestigen des Elektromotors (6) des Fensterreglers (4) umfasst.

15. Dichtungsvorrichtung (10) für Kraftfahrzeugtüren (11) nach Anspruch 1, umfassend einen Rahmen (19), der an dem Panel (1) zum Tragen des Lautsprechers (5) befestigt ist, wobei der Rahmen (19) ein integraler Teil eines Fensterreglers ist (4) und wobei das Panel (1) komprimiert zwischen dem Rahmen (19) und dem Lautsprecher (5) angeordnet ist, um die vom Lautsprecher (5) erzeugten Vibrationen zu reduzieren.

16. Dichtungsvorrichtung (10) für Kraftfahrzeugtüren (11) nach Anspruch 1, wobei das Panel (1) einen Hohlraum (1.4) aufweist, der konfiguriert ist, um einen Elektromotor (6) für einen Fensterheber (4) dicht aufzunehmen, um Vibrationen zu verhindern, die durch den Elektromotor (6) erzeugt werden.

17. Dichtungsvorrichtung (10) für Kraftfahrzeugtüren (11) nach Anspruch 1, umfassend eine in das Panel (1) integrierte Polsterung (16) zum Absorbieren der im Falle eines Seitenaufpralls erzeugten Energie.

## Revendications

1. Dispositif d'étanchéité (10) pour portes de véhicule (11) ayant une ouverture principale (18) et un premier trou de fixation (14), dans lequel le dispositif d'étanchéité (10) est configuré pour être monté sur la porte de véhicule (11) le long d'une direction de montage F, dans lequel le dispositif d'étanchéité (10) comprend :
un panneau (1) constitué de mousse plastique avec une structure à cellules fermées et qui est autoportant,
le panneau (1) est configuré pour couvrir l'ouverture principale (18) de la porte de véhicule (11),
le panneau (1) a une résistance à la compression le long de la direction de montage F inférieure à 1000 KPa à 25 % de déformation mesurée selon la norme ISO844 et supérieure à 150 KPa à 25 % de déformation mesurée selon la norme ISO844,
le panneau (1) ayant un premier côté (1.1) et un deuxième côté (1.2) opposé au premier côté (1.1) et un deuxième trou de fixation (1.3) s'étendant à travers le panneau (1) du premier côté (1.1) au deuxième côté (1.2) et ayant une épaisseur e₁,
dans lequel le dispositif d'étanchéité (10) comprend en outre
des moyens de fixation (3) configurés pour raccorder le dispositif d'étanchéité (10) et la porte de véhicule (11) ayant un essieu principal z prolongé le long de la direction de montage F, un aileron de retenue (3.1) placé sur un premier côté (1.1) du panneau (1), une tête d'attache (3.4) placée sur un deuxième côté (1.2) du panneau (1) et un corps cylindrique (3.2) raccordé à l'aileron de retenue (3.1) et logé dans le deuxième trou de fixation (1.3) du panneau (1),
dans lequel lesdits moyens de fixation (3) sont configurés pour adopter une position de montage finale dans laquelle les moyens de fixation (3) raccordent le dispositif d'étanchéité (10) et la porte de véhicule (11),
dans lequel, dans la position de montage finale, une partie du panneau (1) autour du deuxième trou de fixation (1.3) et la bande d'étanchéité (2) sont comprimées et déformées le long de la direction de montage F en raison de l'action des moyens de fixation (3) dans de telle sorte que l'épaisseur e₁ du deuxième trou de fixation (1.3) avant l'adoption par les moyens de fixation (3) de la position de montage finale soit supérieure à l'épaisseur e₂ du deuxième trou de fixation (1.3) après l'adoption par les moyens de fixation (3) de ladite position de montage finale,
dans lequel les moyens de fixation (3) sont une agrafe quart de tour (3) qui (3) comprend :
• l'essieu principal z,
• l'aileron de retenue (3.1) configuré pour retenir l'agrafe quart de tour (3) dans le deuxième trou de fixation (1.3) du panneau (1) et configuré pour être placé sur le premier côté (1.1) du panneau (1),
• le corps cylindrique (3.2) est raccordé à l'aileron de retenue (3.1) à travers un premier plan p₁ orthogonal à l'essieu principal z, dans lequel la tête d'attache (3.4) peut être inséré à travers le premier trou de fixation (14) de la porte de véhicule (11), et dans lequel la tête d'attache (3.4) est configurée pour adopter deux positions, une première position dans laquelle la tête d'attache (3.4) peut être insérée à travers le premier trou de fixation (14) de la porte de véhicule (11) et une deuxième position qui coïncide avec la position de montage finale, dans laquelle la tête attachée (3.4) peut être retenue dans le premier trou de fixation (14) de la porte de véhicule (11) en raison de la rotation de l'agrafe quart de tour (3) vis-à-vis de la première position,
**caractérisé en ce que** l'agrafe quart de tour comprend en outre :
• un col (3.3) raccordé au corps cylindrique (3.2),
• la tête d'attache (3.4) est raccordée au col (3.3),
dans lequel ladite tête d'attache (3.4) a un corps principal (3.4.1) et deux rampes de tension (3.4.2) dans lequel les rampes de tension (3.4.2) comprennent un bord de montage final (3.4.2.1) dans un deuxième plan p₂ orthogonal à l'essieu principal z et parallèle au plan p₁, et un bord de montage de départ (3.4.2.2) dans un troisième plan p₃ orthogonal à l'essieu principal z et parallèle au plan p₁,
le premier plan p₁ et le deuxième plan p₂ sont séparés d'une distance h₁ plus petite que l'épaisseur e₁ du deuxième trou de fixation (1.3) du panneau (1), et **caractérisé en ce que** le dispositif d'étanchéité (10) comprend en outre une bande d'étanchéité (2) placée le long du périmètre du deuxième côté (1.2) du panneau (1).

2. Dispositif d'étanchéité (10) pour portes de véhicule automobile (11) selon la revendication 1, dans lequel le corps cylindrique (3.2) a un diamètre plus grand que le diamètre du deuxième trou de fixation (1.3) du panneau (1) de telle sorte que lorsque le corps cylindrique (3.2) est à l'intérieur du deuxième trou de fixation (1.3), ils s'adaptent élastiquement ensemble.

3. Dispositif d'étanchéité pour porte de véhicule automobile selon la revendication 1, dans lequel le panneau (1) a une masse volumique moyenne entre 40 et 60 kg/m3.

4. Dispositif d'étanchéité (10) pour portes de véhicule automobile (11) selon la revendication 1, dans lequel la masse volumique du panneau (1) en tout point donné du panneau (1) est la même le long de la direction de l'épaisseur du panneau (1) de telle sorte qu'en tout point donné du panneau (1) la masse volumique du centre soit la même que la masse volumique de la surface.

5. Dispositif d'étanchéité (10) pour portes de véhicule automobile (11) selon la revendication 1, dans lequel la mousse plastique avec une structure à cellules fermées du panneau (1) est formée par des billes en mousse à cellules fermées.

6. Dispositif d'étanchéité pour portes de véhicule automobile selon la revendication 1, dans lequel le panneau (1) est constitué de polypropylène expansé.

7. Dispositif d'étanchéité (10) pour portes de véhicule automobile (11) selon la revendication 1, dans lequel le deuxième côté (1.2) du panneau (1) a une finition de surface dans laquelle les vides existant parmi les cellules de surface du panneau (1) sont rendus étanches.

8. Dispositif d'étanchéité (10) pour portes de véhicule automobile (11) selon la revendication 1, dans lequel la bande d'étanchéité (2) forme une boucle fermée et a un profil creux.

9. Dispositif d'étanchéité (10) pour portes de véhicule automobile (11) selon la revendication 1, dans lequel le rapport entre la dimension principale de la bande d'étanchéité (2) le long de la direction de montage F lorsque ladite bande d'étanchéité (2) n'est pas comprimée et lorsque ladite bande d'étanchéité (2) est comprimée est dans la plage comprise entre 1,75 et 2,5.

10. Dispositif d'étanchéité (10) pour portes de véhicule automobile (11) selon la revendication 1, dans lequel la bande d'étanchéité (2) en matériau est en élastomère thermoplastique et dans lequel la bande d'étanchéité (2) est appliquée par extrusion sur le deuxième côté (1.2) du panneau (1).

11. Dispositif d'étanchéité (10) pour portes de véhicule automobile (11) selon la revendication 1, comprenant un cadre (19) destiné à supporter des composants fonctionnels, dans lequel le cadre (19) est raccordé au panneau (1).

12. Dispositif d'étanchéité (10) pour portes de véhicule automobile (11) selon la revendication 11, dans lequel un haut-parleur (5) est fixé au cadre (19) de telle sorte que le panneau (1) soit intercalé comprimé entre le cadre (19) et le haut-parleur (5) afin de réduire les vibrations produites par le haut-parleur (5) .

13. Dispositif d'étanchéité (10) pour portes de véhicule automobile (11) selon la revendication 1, comprenant un lève-vitre (4) fixé au panneau (1).

14. Dispositif d'étanchéité (10) pour portes de véhicule automobile (11) selon la revendication 13, dans lequel le lève-vitre (4) comprend un cadre (19) pour la fixation du moteur électrique (6) du lève-vitre (4).

15. Dispositif d'étanchéité (10) pour portes de véhicule automobile (11) selon la revendication 1, comprenant un cadre (19) fixé au panneau (1) pour supporter le haut-parleur (5) dans lequel le cadre (19) fait partie intégrante d'un lève-vitre (4) et dans lequel le panneau (1) est intercalé et comprimé entre le cadre (19) et le haut-parleur (5) afin de réduire les vibrations produites par le haut-parleur (5).

16. Dispositif d'étanchéité (10) pour portes de véhicule automobile (11) selon la revendication 1, dans lequel le panneau (1) comprend une cavité (1.4) configurée pour loger de manière étanche un moteur électrique (6) pour un lève-vitre (4) afin d'empêcher les vibrations produites par le moteur électrique (6).

17. Dispositif d'étanchéité (10) pour portes de véhicule automobile (11) selon la revendication 1, comprenant un rembourrage (16) intégré au panneau (1) pour absorber l'énergie produite en cas de choc latéral.
